# EUROPÄISCHE PATENTANMELDUNG

(11) **EP 2 985 731 A1**
(43) Veröffentlichungstag der Anmeldung: **17.02.2016**
(21) Anmeldenummer: 14180535.8
(22) Anmeldetag: 11.08.2014
(51) Int. Cl.: G06Q 50/06

(54) **Verfahren, Anordnung, Anwendung des Verfahrens und Computerprogrammprodukt für eine Auswertung von Energietechnikdaten**

(71) Anmelder: Siemens Aktiengesellschaft, 80333 München (DE)
(72) Erfinder: Fröhner, Wiebke, 92224 Amberg (DE); Werner, Thomas, 91126 Rednitzhembach (DE)

(57) **Zusammenfassung**

Die vorliegende Erfindung betrifft ein Verfahren für eine Auswertung von Energietechnikdaten, bei dem mittels einer Auswerteanordnung (2) eine Datenanfrage (3) in einem Koppeldatenformat erstellt wird, die Datenanfrage (3) mittels einer ersten Kommunikationsverbindung (4) an eine Koppeleinrichtung (5) übermittelt wird, mittels der Koppeleinrichtung (5) die Datenanfrage (3) aus dem Koppeldatenformat in mindestens eine für eine Energietechnikeinrichtung (11-15) spezifische Datenanfrage (6-10) in einem einrichtungsspezifischen Datenformat umgewandelt wird, die mindestens eine spezifische Datenanfrage (6-10) mittels jeweils einer zweiten Kommunikationsverbindung (21) an die jeweilige Energietechnikeinrichtung (11-15) übermittelt wird,
die jeweilige Energietechnikeinrichtung (11-15) ihre durch die jeweilige spezifische Datenanfrage (6-10) angefragten Energietechnikdaten (16-20) mittels der jeweiligen zweiten Kommunikationsverbindung (21) an die Koppeleinrichtung (5) übermittelt, wobei die Energietechnikdaten (16-20) in einem für die Energietechnikeinrichtung (11-15) spezifischen Datenformat vorliegen, die Koppeleinrichtung (5) alle mittels spezifischer Datenanfragen (6-10) angefragten Energietechnikdaten (16-20) in eine Datenantwort (22) in dem Koppeldatenformat umwandelt und mittels der ersten Kommunikationsverbindung (4) an die Auswerteeinrichtung (2) übermittelt.

Weiterhin betrifft die Erfindung eine entsprechende Anordnung, eine Anwendung des Verfahrens und ein Computerprogrammprodukt.

## Beschreibung

Die Erfindung betrifft ein Verfahren für die Auswertung von Energietechnikdaten nach dem Oberbegriff des Anspruch 1.

Die Liberalisierung der Energiemärkte und die Energiewende stellen die Energieversorgungsunternehmen vor große Probleme. Die sich ständig wandelnden energiewirtschaftlichen und regulatorischen Rahmenbedingungen sowie die zunehmende Dezentralisierung der Energieerzeugung erfordert es, die Energietechnikautomatisierung anzupassen oder auszubauen. Da sich gleichzeitig auch die Ertragssituation im Hinblick auf den Unternehmensgewinn der jeweiligen Energieversorgungsunternehmen verschlechtert, sind diese gezwungen, sowohl die Investitions- als auch die Betriebskosten für ihre Energieautomatisierung zu reduzieren.

Das volatile Marktumfeld der Energieversorgungsunternehmen zwingt sie, immer schnellere Anpassungen Ihrer Energietechnikautomatisierung vorzunehmen. Weil die Energieverteilungsnetze zukünftig noch dynamischer durch die Einspeisung der dezentralen Erzeugung und das aktive Verbrauchsverhalten der Stromabnehmer geregelt werden müssen, sind die Energieversorgungsunternehmen gezwungen, sich flexibel den neuen Herausforderungen zu stellen. Dies führt zunehmend zur Vermeidung größerer Investitionen; Insbesondere kleinere Energieversorger vermeiden nämlich aufgrund eines vergleichsweise hohen Risikos von Fehlinvestitionen den Aufbau weiterer Infrastruktur. Weil sich die technischen und regulatorischen Anforderungen für Energieversorgungsnetze im Hinblick auf "Smart Grid" Anwendungen ständig ändern, wird diese Tendenz zur Vermeidung von Investitionen seitens der Energieversorgungsunternehmen noch verstärkt.

Neben der Investitionsfrage (Investitionsausgaben, im Englischen auch "capital expenditure" genannt) müssen operative Prozesse zwingend optimiert werden (Ausgaben für den operativen Geschäftsbetrieb, im Englischen auch "operational expenditure" genannt). Die derzeit eingesetzten komplexen Energietechnikautomatisierungslösungen erfordern einen hohen Aufwand für ihren sicheren und zuverlässigen Betrieb und müssen durch erfahrene und kompetente Mitarbeiter überwacht werden. Aufgrund des genannten hohen Kostendrucks sind die Energieversorgungsunternehmen immer stärker bestrebt, diese starke Bindung von Ressourcen im Hinblick auf Betriebsmittel und Personal zu reduzieren.

Im Zuge dieser Rahmenbedingungen ändert sich auch das Verhalten der Energieversorgungsunternehmen. Sie sind mehr und mehr bereit, auch essentielle technische und wirtschaftliche Funktionen und Prozesse zu standardisieren und in die Hände von Dienstleistern zu geben, wenn sich dadurch wirtschaftliche Vorteile ergeben. Hinzu kommt die veränderte Einstellung von jüngeren Mitarbeitern, die mit Computern, Softwareapplikationen und Onlinediensten groß geworden sind. Die bereits im Markt verfügbaren aktuellen webbasierten Dienstleistungen treffen daher auf eine hohe Akzeptanz bei den Kunden.

Von der Website "www.c3energy.com/technology" ist ein Verfahren für die Auswertung von Energietechnikdaten bekannt, bei dem auf Seite eines Kunden verschiedene Kundensysteme wie etwa intelligente Stromzähler, Gebäudeautomatisierungen und Computersysteme jeweils unterschiedliche Daten liefern. Die unterschiedlichen Daten werden mittels eines Datenintegrators zusammengefasst und an eine Auswertungseinrichtung beim Unternehmen c3energy übermittelt. Dort werden die Daten mittels der Auswertungseinrichtung analysiert und dem Kunden als "software as a service" im Form eines webbasierten Interface präsentiert.

An die Erfindung stellt sich die Aufgabe, ein Verfahren für eine Auswertung von Energietechnikdaten bereit zu stellen, mit dem besonders einfach die Auswertung der Energietechnikdaten mittels einer Auswerteanordnung im laufenden Betrieb des Verfahrens verändert werden kann.

Die Erfindung löst diese Aufgabe durch ein Verfahren für eine Auswertung von Energietechnikdaten, bei dem mittels einer Auswerteanordnung eine Datenanfrage in einem Koppeldatenformat erstellt wird, die Datenanfrage mittels einer ersten Kommunikationsverbindung an eine Koppeleinrichtung übermittelt wird, mittels der Koppeleinrichtung die Datenanfrage aus dem Koppeldatenformat in mindestens eine für eine Energietechnikeinrichtung spezifische Datenanfrage in einem einrichtungsspezifischen Datenformat umgewandelt wird, die mindestens eine spezifische Datenanfrage mittels jeweils einer zweiten Kommunikationsverbindung an die jeweilige Energietechnikeinrichtung übermittelt wird, die jeweilige Energietechnikeinrichtung ihre durch die jeweilige spezifische Datenanfrage angefragten Energietechnikdaten mittels der jeweiligen zweiten Kommunikationsverbindung an die Koppeleinrichtung übermittelt, wobei die Energietechnikdaten in einem für die Energietechnikeinrichtung spezifischen Datenformat vorliegen, die Koppeleinrichtung alle mittels spezifischer Datenanfragen angefragten Energietechnikdaten in eine Datenantwort in dem Koppeldatenformat umwandelt und mittels der ersten Kommunikationsverbindung an die Auswerteeinrichtung übermittelt.

Dem Fachmann ist dabei klar, dass die Erfindung zwar für einen Einsatz im Bereich der Energietechnik besonders geeignet ist, jedoch mit Vorteil auch in anderen Gebieten der Technik verwendet werden kann. Dies können zum Beispiel andere Infrastrukturen (Verkehr, Wasserwirtschaft) oder auch heterogene Automatisierungslösungen sein, wie sie in komplexen industriellen Prozessen zu finden sind (z.B. in der chemischen Industrie oder im Bergbau).

Im Sinne der Erfindung ist dabei unter der Auswerteanordnung beispielsweise ein Computer oder eine Cloud-basierte Datenverarbeitungsanordnung zu verstehen, die mittels eines Webservers verschiedene Auswerteverfahren für Energietechnikdaten bereit stellt. Dabei können die Auswerteverfahren auch als so genannte "Software as a service" über den Webserver für Kunden bereit gestellt werden, die auf diese Weise keine eigenen Auswerteverfahren für ihre Energietechnikdaten bereit halten müssen. Dabei sorgt die Auswerteeinrichtung beispielsweise für den Datenaustausch mit der Koppeleinrichtung, die Auswertung bzw. Berechnung der Ergebnisse und deren Darstellung für den Nutzer in Form von Berichten, Tabellen und Graphiken.

Unter einem Koppeldatenformat ist dabei ein einheitliches Datenformat zu verstehen, das als eine Art Metadatenmodell unabhängig von der konkreten Realisierung der nachgelagerten Energieautomatisierung ausgeführt ist.

Eine Datenanfrage fasst z.B. alle für die Auswertung in der Auswerteanordnung nötigen Datenanfragen zusammen.

Unter einer Koppeleinrichtung im Sinne der Erfindung ist ein intelligenter Adapter zu verstehen, der es nach seiner einmaligen Einrichtung z.B. bei einem Energieversorgungsunternehmen ermöglicht, beispielsweise auch bei einer Veränderung der Datenanfragen der Auswerteinrichtung, diese zu verstehen und Daten bereit zu stellen, die im Beispiel beim Energieversorgungsunternehmen bzw. in dessen Energietechnikeinrichtungen vorliegen. Dabei hat jedes Energieversorgungsunternehmen eine eigene Koppeleinrichtung installiert. Die Koppeleinrichtung kann als spezifisches Gerät ausgeführt sein oder als ein Datenverarbeitungsverfahren auf einem Computer oder einer Cloud-basierten Datenverarbeitungsanordnung wie z.B. einer Firmencloud umgesetzt sein. Die Koppeleinrichtung übersetzt die nach dem Metadatenmodell formulierten Anfragen nach Daten in die jeweils bei den angeschlossenen Energietechnikeinrichtungen verwendeten Datenformate; dabei ordnet es auch die Anfragen den entsprechenden Energietechnikeinrichtungen zu. Enthält die Datenanfrage beispielsweise eine Anfrage nach Stromzählermessdaten, so ordnet die Koppeleinrichtung diesen Teil der Datenanfrage angeschlossenen Stromzählern zu und erstellt eine entsprechende spezifische Datenanfrage an die Stromzähler.

Dazu können im Koppelmodul Übersetzungstabellen eingesetzt werden, die automatisch aus bekannten Herstellerangaben der Energietechnikeinrichtungen erzeugt oder manuell eingegeben werden können.

Durch die Koppeleinrichtung ist es auch möglich, dass die Auswerteanordnung beispielsweise alle Eingangsdaten für eine Lastprognose bei der Koppeleinrichtung abfragt, ohne gezielte Anfragen für alle angeschlossenen Energietechnikeinrichtungen erstellen zu müssen.

Bei der ersten und der zweiten Kommunikationsverbindung kann es sich um jede gängige Kommunikationsverbindung handeln, z.B. Ethernet oder dergleichen. Es kann sich um eine kabelgestützte (z.B. per Kupferkabel oder Lichtwellenleiter) oder um eine Funkverbindung handeln.

Bei der ersten Kommunikationsverbindung wird bevorzugt eine Verbindung über das Internet eingesetzt, weil dieses weit verbreitet und zu geringen Kosten nutzbar ist.

Die zweite Kommunikationsverbindung kann spezifisch für jede einzelne angeschlossene Energietechnikeinrichtung sein oder für alle Energietechnikeinrichtungen gleich.

Dabei ist es ein wesentlicher Vorteil des erfindungsgemäßen Verfahrens, dass z.B. kundenseitig unterschiedliche Energietechnikdaten von unterschiedlichen Energietechnikeinrichtungen mittels der Koppeleinrichtung zusammengefasst und in einem einheitlichen Datenformat für die Auswertung bereit gestellt werden, wobei auch bei einer Änderung der Auswertung in der Auswerteanordnung keine Anpassung auf Kundenseite vorgenommen werden muss, weil die Koppeleinrichtung stets mittels des einheitlichen Datenformats mit der entsprechenden Auswerteanordnung kommuniziert.

Es ist ein weiterer Vorteil des erfindungsgemäßen Verfahrens, dass Energietechnikdaten, die beispielsweise für die Auswertung in der Auswerteanordnung auf Seiten eines Anbieters von Auswertungsverfahren benötigt werden und beispielsweise bei einem Kunden in einem Energieversorgungsunternehmen in verschiedenen Produkten und Systemen der Energieautomatisierung verteilt sind, mit Hilfe der Koppeleinrichtung zentral abgefragt werden können. Es entfällt die wenig praktikable Notwendigkeit, z.B. eine dedizierte Verbindung zwischen jeder einzelnen Komponente und einem webbasierten Applikationsdienst aufzubauen.

In einer bevorzugten Ausführungsform des erfindungsgemäßen Verfahrens werden als Energietechnikeinrichtungen zumindest eine der folgenden Energietechnikeinrichtungen verwendet: Feldgeräte, Stationsleittechnik, Netzleittechnik, Stromzählerdatenmanagement, Stromzähler, Energiemanagement.

In einer anderen bevorzugten Ausführungsform des erfindungsgemäßen Verfahrens enthält die Datenanfrage Angaben für die Definition und/oder Parametrierung der Energietechnikeinrichtungen. Eine Definition ist dabei die Beschreibung einer Funktion von Teilen oder der gesamten betreffenden Energietechnikeinrichtung; eine Parametrierung umfasst Angaben, wie diese Funktion eingesetzt werden soll. Dies ist ein Vorteil, weil dadurch z.B. ein Benutzer die Einstellungen einer Energietechnikeinrichtung direkt verändern kann, um beispielsweise eine Auswertung zu erleichtern. In einem anderen Beispiel kann als Ergebnis einer Auswertung automatisch erkannt werden, dass eine Parametrierung einer Energietechnikeinrichtung verbessert werden muss.

In einer weiteren bevorzugten Ausführungsform des erfindungsgemäßen Verfahrens wird die Datenanfrage in dem Koppeldatenformat mittels Auswerteeinrichtungen erstellt, die im laufenden Betrieb der Auswerteanordnung hinzufügbar, entfernbar oder veränderbar sind. Eine Auswerteeinrichtung kann als spezifisches Gerät ausgeführt sein oder als ein Datenverarbeitungsverfahren auf einem Computer oder einer Cloud-basierten Datenverarbeitungsanordnung wie z.B. einer Firmencloud umgesetzt sein. Diese Ausführungsform ist von Vorteil, weil durch den modularen Aufbau verschiedenste Auswertungen unabhängig voneinander ausgeführt werden können. Dabei ist für jede Auswerteeinrichtung eine Beschreibung der Daten hinterlegt, die sie von der nachgelagerten Energieautomatisierung wie z.B. den angeschlossenen Energietechnikeinrichtungen beziehen soll und die sie an diese geben soll. Mit diesem Konzept ist es möglich, Funktionen und Anwendungen, die heute bereits in den Produkten und Systemen der Energietechnikautomatisierung zur Verfügung stehen, in die Auswerteanordnung zu verlagern. Dabei kann die Auswerteanordnung beispielsweise als modular betreibbarer Applikationsserver ausgebildet sein. Es lassen sich dadurch mit Vorteil Kosten für Produkte und Systeme der Energietechnikautomatisierung reduzieren (CAPEX und OPEX) und damit Wettbewerbsvorteile für einen Kunden erzielen. Ein weiterer Vorteil ist es, dass Änderungen bei den Auswerteeinrichtungen allen Benutzern/Kunden zugleich zur Verfügung gestellt werden können.

In einer weiteren bevorzugten Ausführungsform des erfindungsgemäßen Verfahrens werden als Auswerteeinrichtungen eine Auswerteeinrichtung für eine Lastprognose und/oder eine Auswerteeinrichtung für eine Netzstabilitätsberechnung verwendet.

Es ist prinzipiell möglich, jede Art von Auswerteeinrichtung einzusetzen, die in Energiemanagementsystemen oder Netzleitsystemen zur Anwendung kommen.

In einer weiteren bevorzugten Ausführungsform des erfindungsgemäßen Verfahrens wird mittels der Auswerteeinrichtungen die Datenantwort ausgewertet und in einer Anzeigeeinrichtung dargestellt.

In einer weiteren bevorzugten Ausführungsform des erfindungsgemäßen Verfahrens ist die erste Kommunikationsverbindung verschlüsselt. Dies ist ein Vorteil, weil die Kommunikation zwischen der Koppeleinrichtung und der Auswerteanordnung (z.B. einem Applikationsserver) über gesicherte Verbindungen erfolgen kann, die z.B. den gültigen Anforderungen von Energieversorgungsunternehmen genügen (z.B. BDEW Weißbuch, NERC/FERC Richtlinien). Insbesondere ist es vorteilhaft, dass durch die Verschlüsselung dieser einen Verbindung alle Energietechnikdaten, die z.B. kundenseitig vorliegen, sicher übertragen werden können.

In einer weiteren bevorzugten Ausführungsform des erfindungsgemäßen Verfahrens erfolgt eine Speicherung der Datenantwort nur in der Koppeleinrichtung. Dies ist ein Vorteil, weil sicherheitsrelevante Energietechnikdaten beim erfindungsgemäßen Verfahren nicht außerhalb der Infrastruktur z.B. eines Kunden gespeichert werden müssen. Daher entfällt das Risiko, dass bei Hackerangriffen auf einen zentralen Server, der die Auswerteanordnung und die Daten zahlreicher Kunden enthielte, ein großer volkswirtschaftlicher Schaden entsteht.

In einer Weiterbildung dieser Ausführungsform ist die die Koppeleinrichung so ausgelegt, dass sie die Datenantwort selbsttätig speichert. Dies ist ein Vorteil, weil auf diese Weise einmal aus den Energietechnikeinrichtungen abgerufene Daten zentral abgespeichert werden und bei Bedarf später schnell wieder aufgerufen werden können.

Die Koppeleinrichtung ist in einer anderen Weiterbildung dieser Ausführungsform so ausgelegt, dass mit ihr durch eine Festlegung eines Benutzers eine Kennzeichnung der Datenantwort erfolgt. Diese Kennzeichnung legt fest, ob die Datenantwort in der Koppeleinrichtung und/oder in der Auswerteanordnung gespeichert wird.

In einer weiteren bevorzugten Ausführungsform des erfindungsgemäßen Verfahrens weist die Datenanfrage Angaben zu mindestens einer energietechnikeinrichtungsspezifischen Aktualisierungszykluszeit aufweist, so dass mittels der Koppeleinrichtung entsprechend der energietechnikeinrichtungsspezifischen Aktualisierungszykluszeit durch erneutes Übermitteln der jeweiligen spezifischen Datenanfragen die Datenantwort aktualisiert und an die Auswerteeinrichtung übermittelt wird. Dies ist ein Vorteil, weil hierdurch Energietechnikdaten für die Auswertung ständig aktuell gehalten werden können, soweit dies für die Auswertung erforderlich ist.

In einer weiteren bevorzugten Ausführungsform des erfindungsgemäßen Verfahrens wird entsprechend der energietechnikeinrichtungsspezifischen Aktualisierungszykluszeit ständig die Datenantwort aktualisiert, solange ein Benutzer die Auswerteeinrichtung nutzt, wobei die Aktualisierung unterbrochen wird, wenn der Benutzer die Nutzung beendet. Dies ist ein Vorteil, weil auf diese Weise nur Rechenkapazität und Datenübertragungsbandbreite beansprucht werden, wenn ein Benutzer auch tatsächlich an einer Auswertung interessiert ist.

In einer weiteren bevorzugten Ausführungsform des erfindungsgemäßen Verfahrens wird die Datenantwort vor der Übermittlung komprimiert. Dies ist ein Vorteil, weil die Datenantwort auf diese Weise schneller übertragen werden kann, insbesondere wenn nur eine begrenzte Bandbreite zur Verfügung steht.

In einer weiteren bevorzugten Ausführungsform des erfindungsgemäßen Verfahrens wird mittels der Auswerteanordnung eine Wartungsempfehlung und/oder eine Ersetzungsempfehlung für eine Energietechnikeinrichtung erstellt, wenn die Datenantwort einen Fehler in der betreffenden Energietechnikeinrichtung erkennbar macht. Dies ist ein Vorteil, weil auf diese Weise Ausfälle von Energietechnikeinrichtung vermieden werden können, was Zeit und Kosten einspart.

Ferner stellt sich an die Erfindung die Aufgabe, eine Anwendung des erfindungsgemäßen Verfahrens für eine Auswertung von Energietechnikdaten bereit zu stellen, mit dem besonders einfach und sicher für unterschiedliche Kunden die Auswertung der Energietechnikdaten mittels einer Auswerteanordnung im laufenden Betrieb des Verfahrens verändert werden kann.

Die Erfindung löst diese Aufgabe durch eine Anwendung des erfindungsgemäßen Verfahrens gemäß Anspruch 10. Dabei wird der Vorteil erzielt, dass kundenspezifische Daten nur dem jeweiligen Kunden zugänglich sind, was einen Datenschutz sicherstellt.

In einer Weiterbildung der Anwendung des erfindungsgemäßen Verfahrens werden benutzerspezifische Nutzerrechte für alle einem Kunden zugeordnete Benutzer vergeben. Dies hat den Vorteil, dass die Nutzer nur solche Energietechnikdaten und Auswertungen sehen, deren Grundlage in ihrer Energieautomatisierung liegen und die in ihrer spezifischen Rolle beim Kunden tatsächlich benötigt werden.

Ferner stellt sich an die Erfindung die Aufgabe, eine Anordnung für eine Auswertung von Energietechnikdaten bereit zu stellen, mit der besonders einfach die Auswertung der Energietechnikdaten mittels einer Auswerteanordnung im laufenden Betrieb des Verfahrens verändert werden kann.

Die Erfindung löst diese Aufgabe durch eine Anordnung gemäß Anspruch 11. Dabei ergeben sich sinngemäß die gleichen Vorteile wie eingangs für das erfindungsgemäße Verfahren geschildert.

Bevorzugte Ausführungsformen der erfindungsgemäßen Anordnung ergeben sich aus den Unteransprüchen 12 bis 14, wobei sich sinngemäß die gleichen Vorteile wie eingangs für das erfindungsgemäße Verfahren geschildert ergeben.

Ferner stellt sich an die Erfindung die Aufgabe, ein Computerprogrammprodukt für eine Auswertung von Energietechnikdaten bereit zu stellen, mit dem beim Einsatz des Computerprogrammprodukts auf einem Computer oder einer Cloud-basierten Datenverarbeitungsanordnung besonders einfach die Auswertung der Energietechnikdaten mittels einer Auswerteanordnung im laufenden Betrieb des Verfahrens verändert werden kann.

Die Erfindung löst diese Aufgabe durch ein Computerprogrammprodukt gemäß Anspruch 15. Dabei ergeben sich sinngemäß die gleichen Vorteile wie eingangs für das erfindungsgemäße Verfahren geschildert.

Im Folgenden wird zur besseren Erläuterung der Erfindung eine Ausführungsform des erfindungsgemäßen Verfahrens anhand einer Figur schematisch dargestellt.

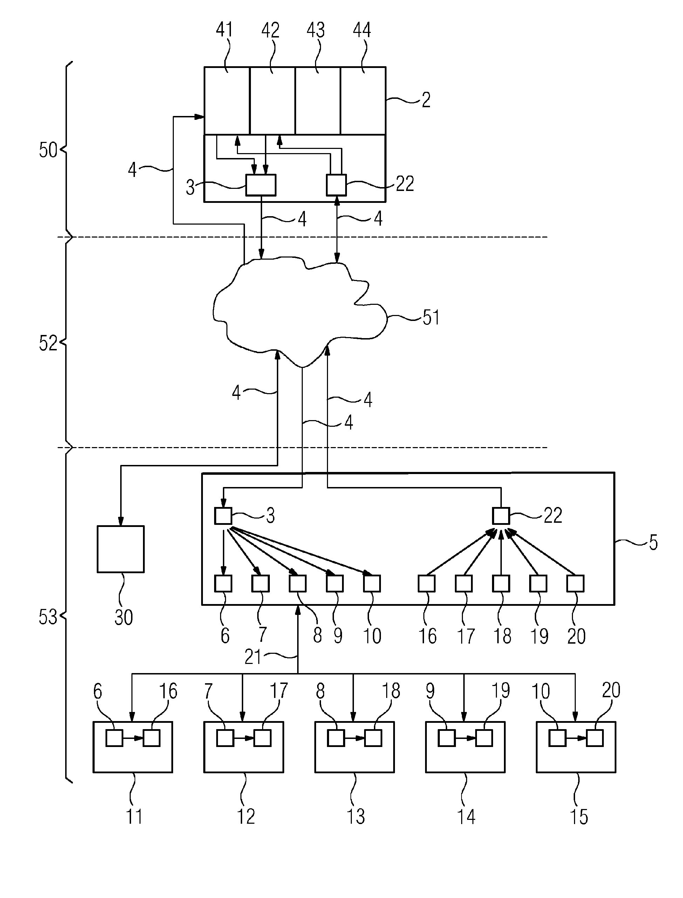

Die Figur zeigt im oberen Bereich alle Komponenten, die beispielsweise bei einem Anbieter von Auswertungslösungen vorliegen. Der obere Bereich ist somit ein Anbieterbereich 50. Im Anbieterbereich 50 ist eine Auswerteanordnung 2 mit Auswerteeinrichtungen 41-44 vorgesehen.

In einem mittleren Bereich sind alle Komponenten dargestellt, die der Kommunikation dienen. Der mittlere Bereich 52 ist somit ein Kommunikationsbereich 52 und zeigt erste Kommunikationsverbindungen 4, die durch das Internet 51 übertragen werden. Die ersten Kommunikationsverbindungen 4 sind dabei Endezu-Ende verschlüsselt.

In einem unteren Bereich sind alle Komponenten dargestellt, die auf Seiten eines Kunden des Anbieters von Auswertungslösungen vorhanden sind. Der untere Bereich ist somit ein Kundenbereich 53. In dem Kundenbereich 53 ist eine Koppeleinrichtung 5 vorgesehen, an die mittels zweiter Kommunikationsverbindungen 21, die beispielsweise als Kabelverbindungen für Ethernet ausgebildet sind, Energietechnikeinrichtungen 11-15 angeschlossen sind. Weiterhin ist in dem Kundenbereich 53 eine Anzeigeeinrichtung 30 vorgesehen, mittels derer ein Benutzer auf Kundenseite die Auswerteanordnung 2 benutzen kann.

Im Folgenden soll die Funktionsweise des erfindungsgemäßen Verfahrens erläutert werden:
Ein Benutzer löst beispielsweise über die Anzeigeeinrichtung 30 eine Aktivierung der beiden Auswerteeinrichtungen 41 und 42 aus; dabei handelt es sich bei der Auswerteeinrichtung 41 um eine Lastprognoseeinrichtung und bei der Auswerteeinrichtung 42 um eine Netzstabilitätsberechnungseinrichtung. Die beiden Auswerteeinrichtungen 41,42 benötigen für ihre Auswertung Energietechnikdaten und tragen daher innerhalb der Auswerteanordnung 2 zur Erstellung einer Datenanfrage 3 bei.

Die Datenanfrage 3 enthält Abfragen zu den benötigten Energietechnikdaten. Die Datenanfrage 3 wird in einem Koppeldatenformat erstellt und ist daher in ihrem Datenformat unabhängig von dem Datenformat, welches in der jeweiligen Auswerteeinrichtung 41 oder 42 benutzt wird. Die Datenanfrage 3 wird mittels der ersten Kommunikationsverbindung 4 verschlüsselt über das Internet 51 an die Koppeleinrichtung 5 übermittelt.

Innerhalb der Koppeleinrichtung 5 wird die Datenanfrage 3 in mindestens eine für eine Energietechnikeinrichtung 11-15 spezifische Datenanfrage 6-10 in einem einrichtungsspezifischen Datenformat umgewandelt. Dies bedeutet, dass die spezifischen Datenanfragen 6-10 nun spezifisch in dem jeweiligen Datenformat der abzufragenden Energietechnikeinrichtung 11-15 vorliegen und mittels der zweiten Kommunikationsverbindung 21 direkt an diese übermittelt werden können.

Innerhalb der Energietechnikeinrichtungen 11-15 werden mittels der spezifischen Datenanfragen 6-10 jeweils die angefragten Energietechnikdaten 16-20 bereitgestellt. Die Energietechnikdaten 16-20 werden über die zweite Kommunikationsverbindung 21 zurück an die Koppeleinrichtung 5 übertragen.

Innerhalb der Koppeleinrichtung 5 werden die Energietechnikdaten 16-20, die in dem jeweiligen Datenformat der Energietechnikeinrichtungen 11-15 vorliegen, in einer einzigen Datenantwort 22 in dem Koppeldatenformat zusammengefasst. Die Datenantwort 22 wird nun mittels der ersten Kommunikationsverbindung 4 über das Internet 51 zurück an die Auswerteanordnung 2 übertragen.

In der Auswerteanordnung 2 wird die Datenantwort 22 derart aufbereitet, dass aus ihr die angefragten Energietechnikdaten für die Auswerteeinrichtung 41 und für die Auswerteeinrichtung 42 in dem jeweils von dieser Auswerteeinrichtung 41,42, benötigten Datenformat bereitgestellt werden.

Es ist ein wesentlicher Vorteil des dargestellten erfindungsgemäßen Verfahrens, dass nach einer einmaligen Einrichtung der Koppeleinrichtung 5 im Kundenbereich 53 keine weiteren Veränderungen im Kundenbereich 53 mehr vorgenommen werden müssen, selbst wenn im Anbieterbereich 50 die Auswerteanordnung 2 dahingehend verändert wird, dass veränderte oder andere Auswerteeinrichtungen 41-44 zum Einsatz kommen; selbst wenn bei diesen veränderten oder neuen Auswerteeinrichtungen 41-44 gänzlich andere Datenformate benötigt werden als zuvor.

Auf diese Weise kann anbieterseitig eine ständige Verbesserung und Anpassung der Auswerteanordnung erfolgen, ohne dass kundenseitig Anpassungen nötig sind. Dies ist insbesondere im Hinblick auf Sicherheitsaspekte und eine Modernisierung von Auswerteeinrichtungen 41,42 vorteilhaft.

## Patentansprüche

1. Verfahren für eine Auswertung von Energietechnikdaten, bei dem
mittels einer Auswerteanordnung (2) eine Datenanfrage (3) in einem Koppeldatenformat erstellt wird,
die Datenanfrage (3) mittels einer ersten Kommunikationsverbindung (4) an eine Koppeleinrichtung (5) übermittelt wird, mittels der Koppeleinrichtung (5) die Datenanfrage (3) aus dem Koppeldatenformat in mindestens eine für eine Energietechnikeinrichtung (11-15) spezifische Datenanfrage (6-10) in einem einrichtungsspezifischen Datenformat umgewandelt wird, die mindestens eine spezifische Datenanfrage (6-10) mittels jeweils einer zweiten Kommunikationsverbindung (21) an die jeweilige Energietechnikeinrichtung (11-15) übermittelt wird, die jeweilige Energietechnikeinrichtung (11-15) ihre durch die jeweilige spezifische Datenanfrage (6-10) angefragten Energietechnikdaten (16-20) mittels der jeweiligen zweiten Kommunikationsverbindung (21) an die Koppeleinrichtung (5) übermittelt, wobei die Energietechnikdaten (16-20) in einem für die Energietechnikeinrichtung (11-15) spezifischen Datenformat vorliegen,
die Koppeleinrichtung (5) alle mittels spezifischer Datenanfragen (6-10) angefragten Energietechnikdaten (16-20) in eine Datenantwort (22) in dem Koppeldatenformat umwandelt und mittels der ersten Kommunikationsverbindung (4) an die Auswerteeinrichtung (2) übermittelt.

2. Verfahren nach Anspruch 1, bei dem die Datenanfrage in dem Koppeldatenformat (3) mittels Auswerteeinrichtungen (41-44) erstellt wird, die im laufenden Betrieb der Auswerteanordnung (2) hinzufügbar, entfernbar oder veränderbar sind.

3. Verfahren nach Anspruch 2, bei dem als Auswerteeinrichtungen (41-44) eine Auswerteeinrichtung (41) für eine Lastprognose und/oder eine Auswerteeinrichtung (42) für eine Netzstabilitätsberechnung verwendet werden.

4. Verfahren nach einem der Ansprüche 2 oder 3, bei dem mittels der Auswerteeinrichtungen (41-44) die Datenantwort (22) ausgewertet und in einer Anzeigeeinrichtung (30) dargestellt wird.

5. Verfahren nach einem der vorhergehenden Ansprüche, bei dem die erste Kommunikationsverbindung (4) verschlüsselt ist.

6. Verfahren nach einem der vorhergehenden Ansprüche, bei dem eine Speicherung der Datenantwort (22) nur in der Koppeleinrichtung (5) erfolgt.

7. Verfahren nach einem der vorhergehenden Ansprüche, bei dem die Datenanfrage (3) Angaben zu mindestens einer energietechnikeinrichtungsspezifischen Aktualisierungszykluszeit aufweist, so dass mittels der Koppeleinrichtung (5) entsprechend der energietechnikeinrichtungsspezifischen Aktualisierungszykluszeit durch erneutes übermitteln der jeweiligen spezifischen Datenanfragen (6-10) die Datenantwort (22) aktualisiert und an die Auswerteeinrichtung (2) übermittelt wird.

8. Verfahren nach Anspruch 7, bei dem entsprechend der energietechnikeinrichtungsspezifischen Aktualisierungszykluszeit ständig die Datenantwort (22) aktualisiert wird, solange ein Benutzer die Auswerteeinrichtung (2) nutzt, wobei die Aktualisierung unterbrochen wird, wenn der Benutzer die Nutzung beendet.

9. Verfahren nach einem der vorhergehenden Ansprüche, bei dem mittels der Auswerteanordnung (2) eine Wartungsempfehlung und/oder eine Ersetzungsempfehlung für eine Energietechnikeinrichtung (11-15) erstellt wird, wenn die Datenantwort (22) einen Fehler in der betreffenden Energietechnikeinrichtung (11-15) erkennbar macht.

10. Anwendung des Verfahrens nach einem der vorhergehenden Ansprüche, bei dem mittels der Auswerteanordnung (2) für eine Mehrzahl von unterschiedlichen Kunden mit jeweils kundenspezifischen Koppeleinrichtungen (5) und Energietechnikeinrichtungen (11-15) jeweils kundenspezifisch eine Auswertung von Energietechnikdaten derart erfolgt, dass jeweils alle kundenspezifischen Datenanfragen (3) und Datenantworten (22) zur Gewährleistung eines Datenschutzes getrennt voneinander verarbeitet werden.

11. Anordnung für eine Auswertung von Energietechnikdaten, umfassend
eine Auswerteanordnung (2) für ein Erstellen einer Datenanfrage (3) in einem Koppeldatenformat,
eine erste Kommunikationsverbindung (4) für ein Übermitteln der Datenanfrage (3) und einer Datenantwort (22),
eine Koppeleinrichtung (5), die geeignet ist, die Datenanfrage (3) aus dem Koppeldatenformat in mindestens eine für eine Energietechnikeinrichtung (11-15) spezifische Datenanfrage (6-10) in einem einrichtungsspezifischen Datenformat umzuwandeln, und die geeignet ist, alle mittels spezifischer Datenanfragen (6-10) angefragten Energietechnikdaten (16-20) in die Datenantwort (22) in dem Koppeldatenformat umzuwandeln mindestens eine zweite Kommunikationsverbindung (21) für ein Übermitteln der jeweiligen spezifischen Datenanfrage (6-10) von angefragten Energietechnikdaten (16-20),
mindestens eine Energietechnikeinrichtung (11-15), die geeignet ist, ihre durch die jeweilige spezifische Datenanfrage (6-10) angefragten Energietechnikdaten (16-20) mittels der jeweiligen zweiten Kommunikationsverbindung (21) an die Koppeleinrichtung (5) zu übermitteln, wobei die Energietechnikdaten (16-20) in einem für die Energietechnikeinrichtung (11-15) spezifischen Datenformat vorliegen.

12. Anordnung nach Anspruch 11, **dadurch gekennzeichnet, dass** die Auswerteanordnung (2) mindestens eine Auswerteeinrichtung (41-44) umfasst, mittels derer in der Auswerteanordnung (2) die Datenanfrage in dem Koppeldatenformat (3) erstellbar ist, wobei die mindestens eine Auswerteeinrichtung (41-44)im laufenden Betrieb der Auswerteanordnung (2) hinzufügbar, entfernbar oder veränderbar ist.

13. Anordnung nach Anspruch 11 oder 12, **dadurch gekennzeichnet, dass** ausschließlich die Koppeleinrichtung (5) geeignet ist, die Datenantwort (22) mittels eines Datenspeichers zu speichern.

14. Anordnung nach einem der vorhergehenden Ansprüche 11 bis 13, **dadurch gekennzeichnet, dass**
die Auswerteanordnung (2) geeignet ist, die Datenanfrage (3) mit Angaben zu mindestens einer energietechnikeinrichtungsspezifischen Aktualisierungszykluszeit zu versehen, und dass die Koppeleinrichtung (5) geeignet ist, entsprechend der in der Datenanfrage (3) enthaltenen energietechnikeinrichtungsspezifischen Aktualisierungszykluszeit durch erneutes Übermitteln der jeweiligen spezifischen Datenanfragen (6-10) an die mindestens eine Energietechnikeinrichtung (11-15) die Datenantwort (22) zu aktualisieren und die aktualisierte Datenantwort (22) an die Auswerteeinrichtung (2) zu übermitteln.

15. Computerprogrammprodukt, das in einem computerlesbaren Medium gespeichert ist und computerlesbare Programmmittel umfasst, mittels derer ein Computer als Datenverarbeitungsanordnung und/oder eine Cloud-basierte Datenverarbeitungsanordnung veranlasst werden, ein Verfahren nach einem der Ansprüche 1 bis 9 durchzuführen, wenn das Computerprogrammprodukt auf dem Computer und/oder der Cloud-basierten Datenverarbeitungsanordnung läuft.
